# EUROPEAN PATENT APPLICATION

(11) **EP 3 597 348 A1**
(43) Date of publication of application: **22.01.2020**
(21) Application number: 19180793.2
(22) Date of filing: 18.06.2019
(51) Int. Cl.: B23K 20/02

(54) **A METHOD OF DIFFUSION BONDING**

(30) Priority: 18.07.2018 GB 201811735
(71) Applicant: Rolls-Royce plc, London SW1E 6AT (GB)
(72) Inventor: Boswell, John, Derby, Derbyshire DE24 8BJ (GB); Wallis, Michael, Derby, Derbyshire DE24 8BJ (GB)
(74) Representative: Rolls-Royce plc

(57) **Abstract**

A method of diffusion bonding two components together comprises providing a first component having a first bonding surface, and a second component having a second bonding surface. Each of the first bonding surface and the second bonding surface is etched. A cold working process is applied to each of the first bonding surface and the second bonding surface. Each of the first bonding surface and the second bonding surface is then etched. The first component is positioned adjacent to the second component with the first bonding surface abutting against the second bonding surface, to define a joint surface between the first component and the second component. A peripheral edge of the joint surface is sealed. The first bonding surface is diffusion bonded to the second bonding surface.

## Description

### Field of the Disclosure

The present disclosure relates to a method of diffusion bonding and particularly, but not exclusively, to a method of diffusion bonding gas turbine engine components.

### Background to the Disclosure

Diffusion bonding is a solid-state joining technique used in metalworking. Diffusion bonding can be used to join similar materials to one another, and also to join dissimilar materials together.

Diffusion bonding operates on the principle of solid-state diffusion, in which the atoms of two solid, metallic surfaces intersperse themselves over time. The diffusion bonding process typically takes place at an elevated temperature, being approximately 50-70% of the absolute melting temperature of the materials being joined. Diffusion bonding is usually implemented by applying high pressure, in conjunction with necessarily high temperature, to the materials to be joined.

It is known to improve the quality of the diffusion bonding joint by grain refinement of the bond surfaces. One such technique for grain refinement of the bond surfaces involves the application of a powder interlayer between the materials being joined. For example, a gallium based interlayer may be used for the diffusion bonding of titanium to stainless steel. A known problem with such interlayer techniques is tensile fracture of the joint along the intermetallic layers due to limited component ductility.

### Statements of Disclosure

According to a first aspect of the present disclosure there is provided a method of diffusion bonding two components together, the method comprising the steps of:
(a) providing a first component having a first bonding surface, and a second component having a second bonding surface;
(b) applying a cold working process to at least one of the first bonding surface and the second bonding surface;
(c) etching each of the first bonding surface and the second bonding surface;
(d) position the first component adjacent to the second component with the first bonding surface abutting against the second bonding surface, to define a joint surface between the first component and the second component;
(e) sealing a peripheral edge of the joint surface; and
(f) diffusion bonding the first bonding surface to the second bonding surface.

An advantage of the method of the present disclosure over the prior art techniques is that no interlayer is used. Consequently, the resulting bond joint is a pure solid state process without the formation of interlayers and the corresponding reduction in tensile and impact mechanical properties. This in turn results improved joint integrity for critical applications, shorter bonding times leading to increased process efficiency and reduced costs.

Thus use of cold working by plastic deformation of the diffusion bonded joint prior to bonding is used to activate the diffusion bonding process through increased dislocation density and grain refinement. Recrystallisation and grain growth lead to finer grains, which increase plasticity at high temperatures and the addition of both dislocations and a higher density of grain boundaries will allow more rapid diffusion.

In the context of this disclosure the term 'cold working' is to be understood to mean mechanical working at a temperature that is substantially less than the relaxation temperature. In other words, at a temperature that is less than approximately 1/3 of the melting temperature of the material, Tₘ.

Grain refinement will improve mechanical properties and more rapid diffusion will either improve joint integrity or speed up the bonding process, allowing the potential to reduce cycle times or cycle temperatures.

The etching step is performed to remove the oxide layer from each of the first bonding surface and the second bonding surface prior to the diffusion bonding process step because any such oxide layer can form a barrier to diffusion bonding.

The cold working process step can make use of a variety of metalworking processes such as, for example, cold rolling, burnishing, peening, or laser shock peening.

The sealing and diffusion bonding steps are common to conventional diffusion bonding techniques and the details of these steps would be well known to a skilled person. Consequently these details are not discussed further herein.

Optionally, step (b) comprises the step of:
(b)' etching each of the first bonding surface and the second bonding surface.

The first and second bonding surfaces are etched prior to the cold working step to avoid the etchant from attacking the grain boundaries in the surface, which will be susceptible to attack because of the high surface strains and residual stresses that will result from the cold working.

Optionally, step (b) comprises the step of:
(b1) applying a cold working process to each of the first bonding surface and the second bonding surface, to produce a cold worked layer having a depth from the surface of less than 1mm.

Cold working processes such as, for example, burnishing, cold rolling and laser shock peening can produce a cold worked layer in either of the bonding surfaces of up to 1mm deep.

Maintaining the cold worked layer at a depth of less than approximately 1mm will limit any mechanical distortion resulting from the cold working process.

Optionally, step (b1) comprises the step of:
(b2) applying a cold working process to each of the first bonding surface and the second bonding surface, to produce a cold worked layer having a depth from the surface of less than 0.5mm.

A cold working process such as peening can be used to provide a cold worked layer in either of the bonding surfaces having a depth of less than 0.5mm.

Optionally, step (b) comprises the prior step of:
(b)" applying a degreasing process to each of the first bonding surface and the second bonding surface.

It may be necessary to clean each of the first bonding surface and the second bonding surface to remove any residual oil, cutting fluid, or other contaminant prior to the step of etching the bonding surfaces. This will ensure that the etching process works effectively across the whole of the bonding surfaces.

Optionally, step (c) comprises the prior step of:
(c)' applying a degreasing process to each of the first bonding surface and the second bonding surface.

It may be necessary to clean each of the first bonding surface and the second bonding surface to remove any residual oil, cutting fluid, or other contaminant prior to the step of etching the bonding surfaces. This will ensure that the etching process works effectively across the whole of the bonding surfaces.

Optionally, step (a) comprises the prior step of:
(a1) machining either or both of the first bonding surface and the second bonding surface, such that each of the first bonding surface and the second bonding surface has a surface finish of less than 0.8 µm.

If either of the first bonding surface and the second bonding surface is uneven or rough, it may be necessary to machine them. This may be performed using an abrasive belt, or by grinding or milling. The machining should produce first and second bonding surfaces having smooth flat profiles with a surface finish of less than approximately 0.8 µm.

It may be advantageous to use a non-destructive examination technique, such as process compensated resonance testing (PCRT), fluorescent penetrant inspection or eddy current inspection, to check for any pre-existing surface or sub-surface cracks. These defects may be exacerbated by the subsequent cold working process.

Optionally, the prior step (a1) comprises the subsequent steps of:
(a1)' inspecting each of the first bonding surface and the second bonding surface using a non-destructive evaluation technique; and
(a2)" quarantining either or both of the first component and the second component if a result of the non-destructive evaluation indicates the presence of a quantity and distribution of surface defects in excess of predetermined limits.

Using a non-destructive evaluation technique to inspect each of the first and second components enables a user to discard components having pre-existing cracks that may increase in size following the cold working process. Any diffusion bonding process conducted using these components would likely result in a joint having poor mechanical properties.

The non-destructive evaluation technique used for process control may be, for example, PCRT, fluorescent penetrant inspection or eddy current inspection. This enables a user to establish the level of cold work in the joint as this would affect the pseudo stiffness of the material.

Optionally, the cold working process is selected from the group consisting of cold rolling, burnishing, peening and laser shock peening.

Cold working of the first and second components can be performed by a variety of processes such as cold rolling, burnishing, peening and laser shock peening.

Optionally, the first component comprises a first tab portion extending distally from the peripheral edge of the joint surface, and the second component has a second tab portion extending distally from the peripheral edge of the joint surface, and step (e) comprises the step of:
(e1) joining the first tab portion to the second tab portion around the periphery of the joint surface to seal the peripheral edge of the joint surface.

The sealing step may be performed by welding a peripheral edge of the first component to a peripheral edge of the second component. This can result in the creation of a heat affected zone around the peripheral edges of the first and second components.

The use of tabs extending from a peripheral edge of the first and second components that are used to seal the peripheral edges of the components together allows the heat affected zone

According to a second aspect of the present disclosure there is provided an aerofoil blade for a turbomachine formed by the method of the first aspect, comprising a joint between a first component and a second component, wherein a grain structure across the joint comprises equiaxed grains having an average grain size of less than 80µm.

The use of the method of the present disclosure to form a diffusion bonded assembly of a first component and a second component results in a joint between the components in which the joint region has a microstructure composed of equiaxed grains having an average grain size of less than 80µm.

As outlined above, the cold working of the first and second bonding surfaces produces an increased dislocation density and thereby improves the grain refinement of the microstructure.

According to a third aspect of the present disclosure there is provided a gas turbine engine for an aircraft comprising:
an engine core comprising a turbine, a compressor, and a core shaft connecting the turbine to the compressor;
a fan located upstream of the engine core, the fan comprising a plurality of fan blades; and
a gearbox that receives an input from the core shaft and outputs drive to the fan so as to drive the fan at a lower rotational speed than the core shaft, wherein at least one of the turbine and compressor comprises an aerofoil blade according to the first aspect.

Optionally, the turbine is a first turbine, the compressor is a first compressor, and the core shaft is a first core shaft;
the engine core further comprises a second turbine, a second compressor, and a second core shaft connecting the second turbine to the second compressor; and
the second turbine, second compressor, and second core shaft are arranged to rotate at a higher rotational speed than the first core shaft.

According to a fourth aspect of the present disclosure there is provided a computer program that, when read by a computer, causes performance of the method according to the first aspect.

According to a fifth aspect of the present disclosure there is provided a non-transitory computer readable storage medium comprising computer readable instructions that, when read by a computer, causes performance of the method according to the first aspect.

According to a sixth aspect of the present disclosure there is provided a signal comprising computer readable instructions that, when read by a computer, causes performance of the method according to the first aspect.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Utip. The work done by the fan blades 13 on the flow results in an enthalpy rise dH of the flow. A fan tip loading may be defined as dH/Utip2, where dH is the enthalpy rise (for example the 1-D average enthalpy rise) across the fan and Utip is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg-1K-1/(ms-1)2). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg-1s, 105 Nkg-1s, 100 Nkg-1s, 95 Nkg-1s, 90 Nkg-1s, 85 Nkg-1s or 80 Nkg-1s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Other aspects of the disclosure provide devices, methods and systems which include and/or implement some or all of the actions described herein. The illustrative aspects of the disclosure are designed to solve one or more of the problems herein described and/or one or more other problems not discussed.

### Brief Description of the Drawings

There now follows a description of an embodiment of the disclosure, by way of nonlimiting example, with reference being made to the accompanying drawings in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 shows a flowchart of the method of diffusion bonding two components together according to the present disclosure;
Figure 5 shows a schematic sectional view of a diffusion bonding joint formed by a first aspect of the method of Figure 4;
Figure 6 shows a schematic sectional view of a diffusion bonding joint formed by a second aspect of the method of Figure 4; and
Figure 7 shows a schematic arrangement of the computer control of the method of Figure 4.

It is noted that the drawings may not be to scale. The drawings are intended to depict only typical aspects of the disclosure, and therefore should not be considered as limiting the scope of the disclosure. In the drawings, like numbering represents like elements between the drawings.

### Detailed Description

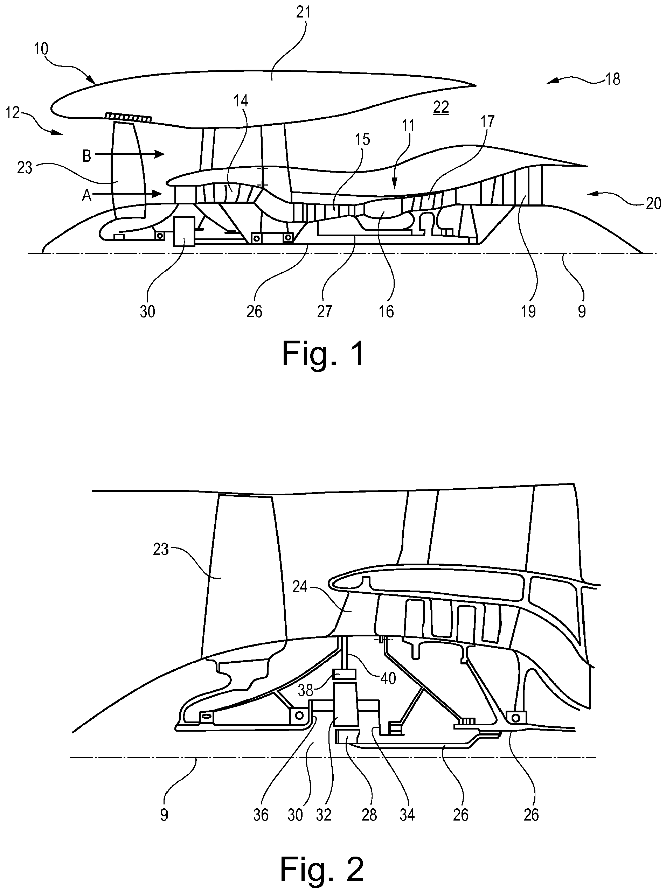

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

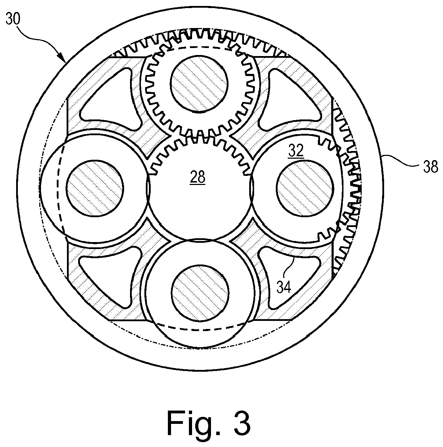

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

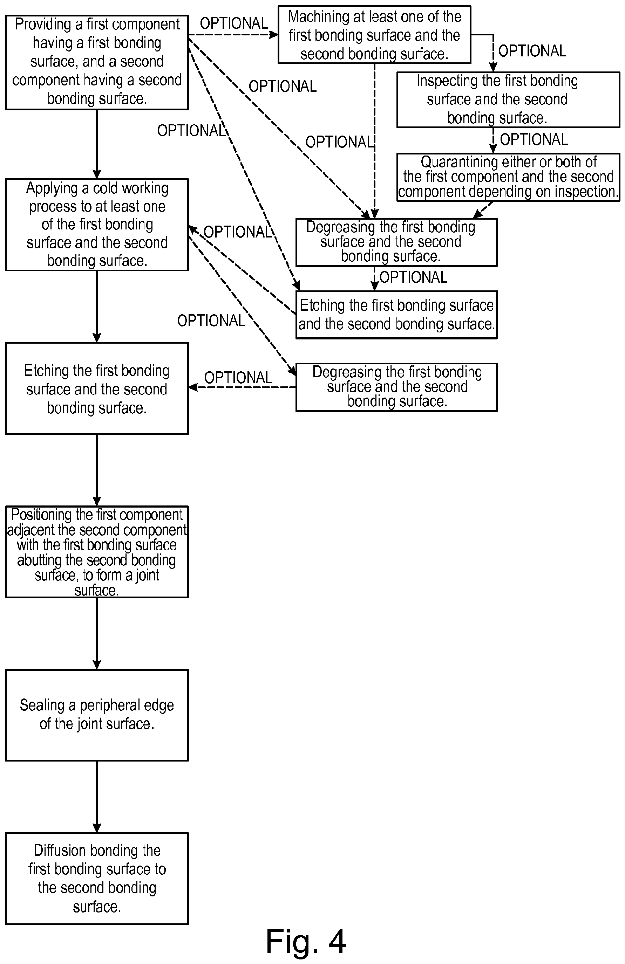

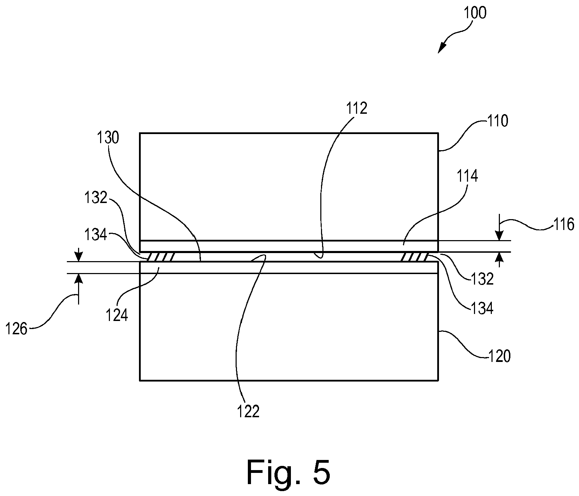

Referring to Figures 4 and 5, a method of diffusion bonding two components together is illustrated in the flow chart of Figure 4, and a first embodiment of the diffusion bonded assembly 100 is shown in Figure 5.

At step 50, a first component 100 has a first bonding surface 112, and a second component 120 has a second bonding surface 122.

The first and second bonding surfaces 112,122 may be planar. Alternatively, the first and second bonding surfaces 112,122 may be curved.

At step 51, each of the first bonding surface 112 and the second bonding surface 122 is machined to produce a smooth and flat surface having a surface finish of less than approximately 08.µm. This machining operation ensures that the first bonding surface 112 and the second bonding surface 122 may be subsequently aligned prior to a diffusion bonding operation.

Following the machining operation, at step 52, each of the first bonding surface 112 and the second bonding surface 122 is inspected using a non-destructive evaluation (NDE) technique such as, for example, fluorescent dye penetrant inspection or eddy current inspection. This inspection is to identify any surface cracks or defects that might be increased in size by the subsequent cold working step.

The result of the non-destructive evaluation inspection is then used, at step 54, to quarantine the first component 110 and/or the second component 120 if any cracks or defects are found in excess of predetermined limits.

At step 56 the first bonding surface 112 and the second bonding surface 122 are degreased to remove any residual oils, cutting fluids or other contaminants prior to the etching step. This ensures that the etch process can be effective across the entirety of the first bonding surface 112 and the second bonding surface 122.

At step 58, each of the first bonding surface 112 and the second bonding surface 122 is etched to remove any oxide layer from the surface prior to the later diffusion bonding process step.

A cold working process is then applied to each of the first bonding surface 112 and the second bonding surface 122, at step 60.

Cold work is a process that results in an increased dislocation density in the material. This in turn inhibits the further movement of dislocations within the crystal structure. Dislocations also pile up at grain boundaries and prevent slip across the boundaries, which provides a further strengthening mechanism. The resistance to slip across the boundaries also reduces ductility and increases hardness, which is why too much cold work leads to cracking. Cold work also induces residual stress, which is the driver for recrystallization and grain growth.

The cold work process of step 60 is applied uniformly across the first bonding surface 112 to produce a first cold worked layer 114, and across the second bonding surface 122 to produce a second cold worked layer 124.

Uniform cold working can be produced by a number of alternative processes such as, for example, cold rolling, burnishing, peening, or laser shock peening. The localised nature of burnishing and laser shock peening are likely to make these methods more favourable. All cold work processes are likely to cause some distortion due to residual stresses, especially in thin sections. Therefore for thin sections some correction may be necessary by further either flattening or straightening to realign the joint. At this stage it may be advisable to carry out some form of NDE, for example ultrasonic inspection or eddy current of the joint. Cold working is likely to close any surface cracks so FPI would be ineffective.

At step 65, after being cold worked, the first bonding surface 112 and the second bonding surface 122 are further degreased to remove any residual oils, cutting fluids or other contaminants prior to the etching step. This ensures that the subsequent etch process can be effective across the first and second bonding surfaces 112,122.

At step 70, each of the first bonding surface 112 and the second bonding surface 122 is etched to remove any oxide layer from the surface prior to the diffusion bonding process step. A typical chemical etching process will remove less than 10µm from the bonding surface 112,122

At step 75, the first component 110 is positioned adjacent to the second component 120, with the first bonding surface 112 conformally abutting against the second bonding surface 122. The conformally positioned first and second bonding surfaces 112,122 together define a joint surface 130.

At step 80, a peripheral edge 132 of the joint surface 130 is sealed in readiness for the subsequent diffusion bonding process. The sealing of the peripheral edge 132 of the joint surface 130 is best achieved by a high localised energy input process such as, for example, laser welding, electron beam welding, or friction stir welding. This ensures that any heat input to the first and second components 110,120 generated by the joining process is minimal and so does not relieve the residual stress imparted by the earlier cold working process of step 60 .

Alternatively the diffusion bonded assembly can be encapsulated in a metal canister, typically mild or stainless steel is used. This method is used for HIP diffusion bonding. The joint must be evacuated of any air prior to bonding and this is typically facilitated by welding a tube onto the joint, then pump and purge with an inert gas to remove the air from the assembly. The pipe is then heated and crimped to achieve a pressure weld.

At step 85, a diffusion bonding process is undertaken either by mechanically applying pressure, or hydrostatically applying pressure typically using high or low pressure argon. The joined first and second components 110,112 are then heated to a temperature at which the material is sufficiently plastic to allow creep deformation of the joint surface 130 to occur and for any surface asperities to collapse so that the first and second bonding surfaces 112,122 are in intimate contact. Diffusion and grain growth occurs across the joint surface 130, ideally resulting in an indistinguishable boundary with no discernible joint line.

The earlier cold work (step 60) will assist bonding by promoting recrystallization and grain growth due to the formation of sub-grain, which act as nucleation points for new grains during bonding, through the subsequent increase in grain boundaries and the increase in dislocations, both of which increase diffusion rates by up to an order of magnitude, i.e. grain boundaries and dislocations produce channels in which atoms can diffuse more easily. Dislocations and grain boundaries also accelerate the creep process, which is necessary in the initial phases of the diffusion bonding process. The key variable of the process are time, temperature and pressure; cold working should reduce the time required for diffusion and grain growth to occur by increasing the thermodynamic energy available for the process to take place.

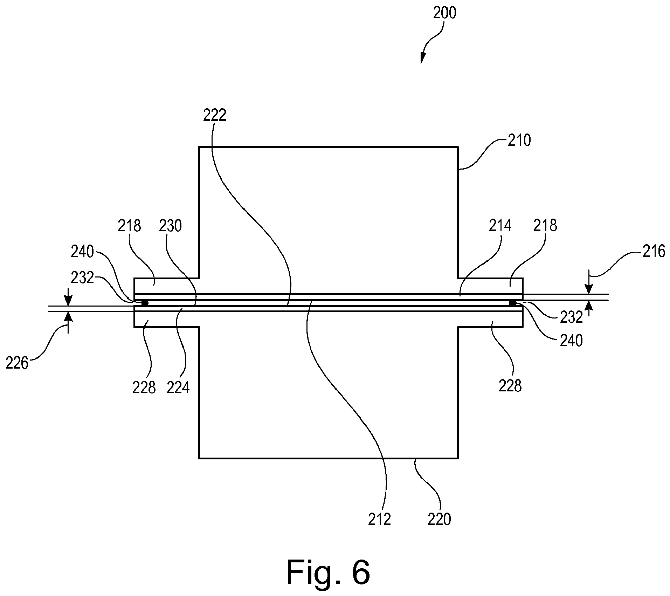

Referring to Figure 6, a diffusion bonded assembly according to a second embodiment of the method of the disclosure is designated generally by the reference numeral 200. Features of the assembly 200 which correspond to those of assembly 100 have been given corresponding reference numerals for ease of reference.

As described above in relation to the diffusion bonded assembly 100, the diffusion bonded assembly 200 has a first component 210 with a first bonding surface 212, and a second component 220 with a second bonding surface 222.

The first component 210 has a first tab portion 218 extending outwardly from a periphery of the first component 210 such that the first bonding surface 212 extends across the first tab portion 218. Likewise, the second component 220 has a second tab portion 228 extending outwardly from a periphery of the second component 220 such that the second bonding surface 222 extends across the second tab portion 228.

The method steps 51, 52, 54, 56, 58, 60, 65, 70, and 75 described above in relation to the first embodiment of the joint assembly 100 apply equally to the second embodiment of the joint assembly 200.

At step 80, it is the laterally protruding first and second tab portions 218,228 that are joined together to seal a peripheral edge of the joint surface 230. These first and second tab portions 218, 228 thus serve only to seal the peripheral edge of the joint surface 230 in preparation for the subsequent diffusion bonding process step. The use of the protruding first and second tab portions 218,228 ensures that the heat affected zone of the weld away from the joint surface 230 in order to prevent annealing of the cold worked layers 214,224 by the heat from the weld.

After the diffusion bonding process step (step 80) has been completed, the first and second tab portions 218,228 may be removed from the finished joint assembly 200 by, for example, machining.

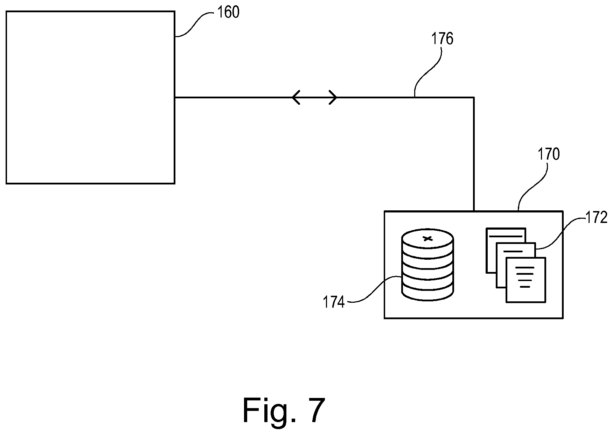

The method of the present disclosure may be controlled by means of a computer as illustrated in Figure 7. A computer 170 is connected the diffusion bonding apparatus 160 by means of a signal line 176. The computer 170 includes a computer program 172 that is stored a computer readable storage medium 174. The operating instructions for the diffusion bonding apparatus may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more DSPs, general purpose microprocessors, ASICs, FPGAs, or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including a processor, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples have been described. These and other examples are within the scope of the following claims.

Except where mutually exclusive, any of the features may be employed separately or in combination with any other features and the disclosure extends to and includes all combinations and sub-combinations of one or more features described herein.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Moreover, in determining extent of protection, due account shall be taken of any element which is equivalent to an element specified in the claims. Various changes to the described embodiments may be made without departing from the spirit and scope of the invention.

## Claims

1. A method of diffusion bonding two components together, the method comprising the steps of:
(a) providing a first component having a first bonding surface, and a second component having a second bonding surface;
(b) applying a cold working process to at least one of the first bonding surface and the second bonding surface;
(c) etching each of the first bonding surface and the second bonding surface;
(d) position the first component adjacent to the second component with the first bonding surface abutting against the second bonding surface, to define a joint surface between the first component and the second component;
(e) sealing a peripheral edge of the joint surface; and
(f) diffusion bonding the first bonding surface to the second bonding surface.

2. The method as claimed in Claim 1, wherein step (b) comprises the prior step of:
(b)' etching each of the first bonding surface and the second bonding surface.

3. The method as claimed in Claim 1 or Claim 2, wherein step (b) comprises the step of:
(b1) applying a cold working process to each of the first bonding surface and the second bonding surface, to produce a cold worked layer having a depth from the surface of less than 1mm.

4. The method as claimed in Claim 3, wherein step (b1) comprises the step of:
(b2) applying a cold working process to each of the first bonding surface and the second bonding surface, to produce a cold worked layer having a depth from the surface of less than 0.5mm.

5. The method as claimed in any one of Claims 1 to 4, wherein step (b) comprises the prior step of:
(b)" applying a degreasing process to each of the first bonding surface and the second bonding surface.

6. The method as claimed in any one of Claims 1 to 5, wherein step (c) comprises the prior step of:
(c)' applying a degreasing process to each of the first bonding surface and the second bonding surface.

7. The method as claimed in any one of Claims 1 to 6, wherein step (a) comprises the subsequent step of:
(a1) machining either or both of the first bonding surface and the second bonding surface, such that each of the first bonding surface and the second bonding surface has a surface finish of less than 0.8 µm.

8. The method as claimed in Claim 7, wherein the step (a1) comprises the subsequent steps of:
(a1)' inspecting each of the first bonding surface and the second bonding surface using a non-destructive evaluation technique; and
(a1)" quarantining either or both of the first component and the second component if a result of the non-destructive evaluation indicates the presence of a quantity and distribution of surface defects in excess of predetermined limits.

9. The method as claimed in any one of Claims 1 to 8, wherein the cold working process is selected from the group consisting of cold rolling, burnishing, peening and laser shock peening.

10. The method as claimed in any one of Claims 1 to 9, wherein the first component comprises a first tab portion extending distally from the peripheral edge of the joint surface, and the second component has a second tab portion extending distally from the peripheral edge of the joint surface, and step (e) comprises the step of:
(e1) joining the first tab portion to the second tab portion around the periphery of the joint surface to seal the peripheral edge of the joint surface.

11. An aerofoil blade for a turbomachine formed by the method as claimed in any one of Claims 1 to 10, comprising a joint between a first component and a second component, wherein a grain structure across the joint comprises equiaxed grains having an average grain size of less than 80µm.

12. A gas turbine engine for an aircraft comprising:
an engine core comprising a turbine, a compressor, and a core shaft connecting the turbine to the compressor;
a fan located upstream of the engine core, the fan comprising a plurality of fan blades; and
a gearbox that receives an input from the core shaft and outputs drive to the fan so as to drive the fan at a lower rotational speed than the core shaft, wherein at least one of the turbine and compressor comprises an aerofoil blade as claimed in Claim 11.

13. The gas turbine engine according to Claim 12, wherein:
the turbine is a first turbine, the compressor is a first compressor, and the core shaft is a first core shaft;
the engine core further comprises a second turbine, a second compressor, and a second core shaft connecting the second turbine to the second compressor; and
the second turbine, second compressor, and second core shaft are arranged to rotate at a higher rotational speed than the first core shaft.

14. A computer program that, when read by a computer, causes performance of the method as claimed in any one of Claims 1 to 10.

15. A non-transitory computer readable storage medium comprising computer readable instructions that, when read by a computer, causes performance of the method as claimed in any one of Claims 1 to 10.
